# EUROPEAN PATENT SPECIFICATION

(11) **EP 3 907 651 B1**
(45) Date of publication and mention of the grant of the patent: **09.12.2026**
(21) Application number: 20173742.6
(22) Date of filing: 08.05.2020
(51) Int. Cl.: G06V 10/82, G06V 10/776, G06V 20/56, G06N 3/0464, G06N 3/0895, G06N 3/09

(54) **TRAINING A FUNCTION TO RESPOND PREDICTABLY TO DIFFERENCES**
TRAINING EINER FUNKTION, UM VORHERSAGBAR AUF UNTERSCHIEDE ZU REAGIEREN
ENTRAÎNEMENT D'UNE FONCTION POUR RÉPONDRE DE MANIÈRE PRÉVISIBLE AUX DIFFÉRENCES

(43) Date of publication of application: 10.11.2021
(73) Proprietor: Robert Bosch GmbH, 70442 Stuttgart (DE)
(72) Inventor: Keller, Thomas Andy, 1098XH Amsterdam (NL); Welling, Max, 1402GN Bussum (NL); Khoreva, Anna, 70197 Stuttgart (DE)

(56) References cited:
- EP-A1- 3 627 391
- GHASEDI KAMRAN ET AL: "Balanced Self-Paced Learning for Generative Adversarial Clustering Network", 2019 IEEE/CVF CONFERENCE ON COMPUTER VISION AND PATTERN RECOGNITION (CVPR), IEEE, 15 June 2019 (2019-06-15), pages 4386 - 4395, XP033687495, DOI: 10.1109/CVPR.2019.00452

## Description

### FIELD OF THE INVENTION

The invention relates to a computer-implemented method of training a machine learnable function, and to a corresponding system. The invention further relates to a computer-readable medium comprising instructions and/or function parameters.

### PRIOR ART

GHASEDI KAMRAN ET AL: "Balanced Self-Paced Learning for Generative Adversaria! Clustering Network", 2019 IEEE/CVF CONFERENCE ON COMPUTER VISION AND PATTERN RECOGNITION (CVPR), IEEE, 15 June 2019 discloses a deep Generative Adversarial Clustering Network (ClusterGAN), which tackles the problems of training of deep clustering models in an unsupervised manner.

### BACKGROUND OF THE INVENTION

Machine learnable functions have the potential to perform tasks much more accurately than manually designed algorithms. For example, machine learnable functions, e.g., based on convolutional neural networks or similar techniques, have been shown to be able to achieve good degrees of accuracy for various image classification tasks, such as recognizing digits, distinguishing between cats and dogs, etcetera. Typically, such a machine learnable function is trained on a training dataset, e.g., comprising images labelled with their desired classifications. Generally, the more training examples, the better the resulting accuracy of the trained function.

In many practical situations, the feasibility of obtaining training data that covers a sufficiently wide range of inputs, is a main obstacle hindering the practical adoption of machine learning solutions. For example, in the area of (semi-)autonomous vehicles, machine learnable functions have the potential to carry out various tasks that are needed for controlling or monitoring the vehicle, e.g., image analysis of camera images of the environment of the vehicle, e.g., to warn for dangerous traffic situations. However, obtaining training data for such tasks requires driving around in the vehicle; this is expensive and can even be dangerous. Moreover, images of a vehicle's environment can vary in many different ways, e.g., in terms of the general configuration of the scene (whether there is another car in front, whether there are pedestrians nearby, etc.) but also in terms of many other aspects (e.g., the type of road that the car is driving on; the way traffic signs look like, which differs from country to country; the weather conditions; etcetera).

This makes it almost impossible to obtain a training dataset that covers all possible combinations of situations, in particular corner cases, that the vehicle may encounter. On the other hand, especially when used to make automated driving decisions, it is crucial for machine learnable functions to deal reliably especially with such corner cases. Accordingly, it is desirable to use functions with a high degree of generalizability, e.g., that provide accurate results also on inputs that were not directly covered in the training dataset.

One machine learning technique that is known to help generalizability, are so-called group equivariant convolutional networks, e.g., as described in "Group Equivariant Convolutional Networks" by T. Cohen *et al.* ( available at https://arxiv.org/abs/1602.07576). A group equivariant convolutional network is a deep neural network, i.e., a function that processes an input, in this case an image, by passing it through multiple respective parameterized layers. In a group equivariant convolutional network, representations at these respective layers are modelled as linear G-spaces, where G is a predefined mathematical group (i.e., a set with a binary operation satisfying closure, associativity, identity, and invertibility) representing a set of transformations that can be applied. Equivariance means that, given transformations *T_{g}* on the layer inputs and ${T}_{g}^{′}$ on the layer outputs, where *g* ∈ *G*, the identity $Φ \left({T}_{g}x\right) = {T}_{g}^{′} Φ \left(x\right)$ holds. For example, rotating or mirroring an input should lead to a corresponding rotation of the output. This additional structure given to neural network layers allows data to be modelled more efficiently and improves generalizability, essentially because knowledge about desired function outputs can be shared between inputs and their transformed variants.

Unfortunately, existing techniques to make functions equivariant have several disadvantages. Complex analytic formulations of the group of transformations G are needed, and additionally, these transformations must be known ahead of time and hard-coded into the model architecture. Also when using the function, the group of transformations is used, making the model architecture dependent on the type of transformations used in training and thereby incompatible with standard tools for applying machine learning techniques, e.g., standard implementations of convolutional neural networks. The transformations also need to conform to the group axioms of the group of transformations *G*. Accordingly, only a restricted set of (geometric-type) transformations can be specified.

### SUMMARY OF THE INVENTION

It would be desirable to train a machine learnable function, for example an image classifier or image feature extractor, such that generalizability is improved, but without the need to integrate transformations into the model architecture. In particular, it would be desirable to reward predictability of variations of inputs observations that do not behave according to a mathematical group structure. It would also be desirable to improve generalizability of machine learnable functions without affecting their model architecture, e.g., such that the trained function is a standard convolutional neural network or the like.

In accordance with an aspect of the invention, a computer-implemented method and a corresponding system are provided for training a machine learnable function, as defined by claims 1 and 14, respectively. In accordance with an aspect of the invention, a computer-readable medium is described as defined by claim 15.

Various aspects relate to training a machine learnable function (in other words, learning the set of parameters parameterizing the machine learnable function) by optimizing an objective function. Many types of machine learnable functions, and objective functions suitable for training them, are known. For example, the learning task can be classification or regression. The training may be supervised, e.g., based on a labelled dataset of training input observations and corresponding training outputs, the objective function being configured to minimize a difference between function outputs of the machine learnable function and corresponding training outputs. The training can also be unsupervised, e.g. learning of a feature extractor (feature extraction is also known as representation learning). In either case, conventional objective functions can be used.

Interestingly, to improve generalizability, the machine learnable function may be rewarded for responding predictably at a layer of the machine learnable function to a set of differences between input observations. This is analogous to group-equivariant convolutional neural networks, which enforce that applying a given *G*-action to an input observation results in applying a corresponding *G*-action to an output of a layer. Interestingly, however, the inventors envisaged to reward predictability not by hardcoding a particular set of transformations into the model architecture, but by including a regularization objective in the objective function that is used to train the machine learnable function. For example, a regularization objective decreasing in a degree of predictability may be included in a loss function to be minimized, or a regularization objective increasing in a degree of predictability may be included in an objective function to be maximized.

In particular, the objective function may be based on pairs of first and second input observations, and on difference labels indicating differences between these first and second observations. For example, the first and second observations may be images of generally corresponding scenes, e.g., both may be environments of a vehicle in which the vehicle is stopping for a traffic light. The difference label may single out a particular difference between the first and second observations, e.g., in terms of weather conditions; the type of vehicle in front of the vehicle; the country in which the image was obtained (and according, the type of traffic lights and/or traffic signs present); etcetera. Preferably, the pairs of observations are selected such that, apart from the difference indicated by the difference label, they correspond to each other as much as possible.

In particular, the difference label may represent a transformation according to which the second observation may be obtained (at least approximately) from the first observation. Accordingly, swapping the first and second observation typically also leads to another difference label. Interestingly, however, the set of differences from which the difference label is selected does not need to have any particular mathematical structure, in particular, it does not need to be a group in the mathematical sense.

To evaluate a regularization objective for encouraging predictability at a certain layer, the machine learnable function may be applied to first and second observations to obtain respective representations at that layer. The regularization objective may then reward predictability by encouraging a mutual statistical dependence between these representations given their difference label. In other words, given the difference label, an amount of information that one representation provides about the other representation, may be maximized by the objective function. Such a mutual statistical dependence can for example be computed in terms of conditional mutual information or interaction information, as discussed in more detail below.

By encouraging mutual statistical dependence of the representations given the difference label, a regularizer is obtained that improves the generalizability and robustness of the trained function. Namely, the function is effectively rewarded to learn how a difference between a pair of input observations affects the function output. Accordingly, if the same difference also applies to an unseen observation, the function is able to better deal with this difference.

In terms of the achieved result, this is analogous to the improved generalizability provided by group-equivariant convolutional networks, and indeed, the inventors were able to show that group-equivariant convolutional networks provided an optimum for the regularization objective when phrased in terms of conditional mutual information. Interestingly, however, the provided techniques provide much more flexibility than group-equivariant convolutional networks, leading to several practical advantages.

By using a difference based on a mutual statistical dependence, a measure is obtained that is applicable to a broad set of differences, e.g., no particular mathematical group structure needs to be assumed. This allows to capture various types of differences that occur in practical situations, e.g., difference in weather conditions, in country where the observation took place, etc. It is also not needed to explicitly define how a difference transforms one input to the other: it is sufficient to have pairs of input observations and an accompanying difference label, and even the difference label can be learned from the data. It is also not needed for the pair to differ exactly and only according to the difference type, e.g., there may be other differences between the observations (although training is more effective if there is a closer correspondence). For the representations to which the regularization objective is applied, no transformations need to be given as input at all, and accordingly, the function can itself learn an optimal way of representing inputs.

Moreover, inclusion in the objective function allows to balance predictability against other training objectives. Effectively, mutual statistical dependence may be regarded as a continuum between unpredictability and predictability. Because the regularization term is typically weighed against other terms of the objective function, the function itself can automatically arrive at an amount of statistical dependence that is appropriate for the learning task at hand, instead of being forced to rigorously enforce equivariance no matter what. This also improves the applicability of the function to situations where enforcing equivariance too rigorously would degrade performance.

Another advantage of encouraging predictability by adapting the objective function (e.g., instead of the model architecture), is that a trained function can be obtained of which the architecture does not depend on the type of differences considered during training, e.g., the hardware/software used to apply the trained function does not need to depend on or support various kinds of transformations providing such differences. Thus, compatibility with conventional software/hardware for applying machine learning functions, e.g., convolutional neural network evaluation software/hardware, is improved.

Several choices are possible concerning the layer to which the regularization objective is applied. Regardless of the type of machine learnable function, the objective may be applied at the output layer. This also applies if the machine learnable function does not otherwise follow a layered structure, e.g., also to non-neural networks. The output layer is a particularly good choice if the machine learnable function is a feature extractor, e.g., an image feature extractor, since in this case, the predictability provided by the regularization objective can then be fully used by other components using it. For machine learnable functions that have internal layers, such as neural networks and deep Gaussian processes, it is possible, instead or in addition, to apply the regularization objective to an internal layer of the function, or to apply respective regularization objectives to multiple respective internal layers. Beneficial choices for the machine learnable function and/or layers to regularize are discussed throughout.

Optionally, the machine learnable function may be an image classifier or an image feature extractor. Such image processing models in particular have to deal with the problem of input variation, and thus benefit especially from having improved generalizability. Generally, an image classifier may map an input image to one or more classification outputs. For example, the image classifier may be a detection model, e.g., a function providing a classification output indicating whether or not an object is present in the entire image or in a segment of the image. The image classifier can also be a semantic segmentation model, e.g., a function providing multiple classification outputs indicating presence of objects in respective pixels or segments of the image. An image feature extractor may map an input image to a vector of image features, for example, for use in classification or other downstream applications. Using the described training techniques, more effective and robust image processing models can be obtained.

Optionally, the machine learnable function may be an image feature extractor for use in an overall image classifier. In this case, it is possible to train the image feature on an unlabelled training dataset (i.e., the training does not use any available classification labels), and then to train the overall image classifier on a labelled training dataset. The labelled dataset can for example be a subset of the unlabelled training dataset for which labels are available, or can be a separate dataset. Typically, unlabelled data is much easier to obtain than labelled data. By separating the training of the feature extractor from the training of the classifier, data without labels can be used to train the feature extractor. When separately training the feature extractor, it is especially important to learn generalizable features, and thus, the provided regularization objective is beneficial. The regularization objective is in this example typically applied to the output layer of the feature extractor. When training the classifier, also the feature extractor may be fine-tuned (which may or may not include using the regularization objective), but this is not necessary.

Optionally, the objective function may comprise multiple respective regularization objectives for multiple respective layers of the machine learnable function. Different layers of a function, such as a neural network, tend to represent input observations at different levels of abstraction. By applying regularization objectives at several layers, generalizability at several layers levels of abstraction can thus be rewarded. For example, during training, at each layer, the regularization objective may be included and removed from the objective function to see whether it has a beneficial effect at that layer.

Optionally, the first and second input observations are images representing a same type of scene, e.g., scenes comprising similar objects or similar configurations of multiple objects. For example, both images may represent an environment of a vehicle, for example, for use in a vision model for a (semi-)autonomous vehicle. For example, both images in a pair may represent a scene where the vehicle is cruising on the highway, where it is stopping for a traffic light, where a pedestrian is unexpectedly crossing the road; etcetera. However, other application areas in which robustness to transformation areas is needed, are also possible.

In such cases, a difference label may indicate a difference in a property of an object in the scene, or the scene itself (e.g., a brand of car; a type of car; whether cars should keep left or keep right; or a country in which the image was captured, which may be regarded as a proxy for several scene properties). A difference label can also indicate a difference in observation conditions of the scene, for example, a difference in weather conditions; in occlusion level of an object captured by the image; in position or orientation of an object in the image; etcetera. By including a regularization objective with respect to such semantically meaningful differences, the function may be rewarded to reason about these differences and their effect on function outputs, resulting in a function that generalizes better with respect to these differences.

Optionally, the machine learnable function may be a convolutional network. Convolutional networks, also known as convolutional neural networks (CNNs), have proven to be effective for various learning tasks, particularly image analysis. Their respective layers typically represent an input observation at respective levels of abstraction. By selecting internal layers of a CNN, various kinds of differences between input observations can be appropriately taken into account in a regularization objective.

Optionally, evaluating the regularization objective may comprise estimating a mutual information between the first and second representations given the difference label. This so-called conditional mutual information provides a suitable, information-theoretically motivated way of determining mutual statistic dependence between representations of input observations. However, also other mutual informations with respect to these three variables may be estimated, such as the mutual information between the first representation and the difference label given the second representation, or the mutual information between the second representation and the difference label given the first representation. For example, the regularization objective may include an interaction information, as also described below, that may be based on these mutual informations. Instead of using mutual information-based measures, also other measures of mutual statistical dependence, e.g., conditional entropy of the second observation given the first representation and the difference label, or variation of information, are possible.

One reason why the use of (conditional) mutual information specifically is beneficial, is because it can be estimated efficiently according to a trainable mutual information estimation model. Although it is also possible to directly compute (conditional) or estimate mutual information or related quantities such as conditional entropy, the use of a trainable estimation model greatly improves performance. Interestingly, known mutual information estimation models can be trained simultaneously with the machine learnable function, for example, by including the learning objective for the mutual information estimation model in the objective function. This way, the function for estimating the mutual information can be progressively updated as the training of the machine learnable function progresses, instead of having to be learned from scratch every time the machine learnable function changes.

Optionally, the regularization objective may be further configured to discourage a mutual dependence between the first and second representations unconditioned on the difference label, for example, as measured by the mutual information between the first and second representations (not conditioned on the difference label). This way, the function may be discouraged to provide the same representation for both input observations, in other words, the function may be discouraged from determining a representation that is not just equivariant but even invariant. Such an invariant representation is likely to be a local optimum of the regularization objective. However, invariance may be unfavourable to the generalizability of the function since it effectively rewards the function to discard information about the labelled difference rather than learning how to respond to it in a non-trivial way. In network-structured functions, this may be due to propagation and orderly structuring of transformation information deeper into the network, which an invariant network may discard. Accordingly, by thus penalizing invariance, better generalizability may be achieved, especially in cases where there is little training data for corner cases.

Specifically, the regularization objective may comprise the difference between the mutual information conditioned on the difference label, and the mutual information unconditioned on the difference label. This difference is also known as the interaction information between the first representation, the second representation, and the difference label. It is noted that that the interaction information can also be computed without explicitly computing the abovementioned mutual informations; however, it will be appreciated that whichever way the interaction information is computed, it generally both rewards mutual statistical dependence between the first and second representations given the difference label, and discourages mutual dependence between the representations unconditioned on the difference label.

Several options are envisaged for obtaining a pair of input observations and a corresponding difference label. The first input observation typically comes from the training dataset. Optionally, given a difference label, the second input observation may be generated from the first input observation and the difference label. For example, a transformation according to the difference label may be applied, e.g., an object in an image may be partially occluded; a difference in weather conditions may be simulated, e.g., by adding snow or rain; etcetera. It is also possible to determine the difference label given the pair of observations using a machine learnable labelling function. For example, labels for some pairs of observations may be used train a labelling function for labelling other pairs, thus decreasing the labelling effort needed; or the labelling function may even be trained in an unsupervised way, so that no labels may need to be manually specified at all.

The techniques described herein can be applied to various types of input observations. This includes images but also various other types of sensor data, including radar data, ultrasound data, LiDAR data, motion data, etc. For example, in the context of a computer-controlled system, the sensor data may provide an observation of the computer-controlled system and/or its environment. In such cases, the computer-controlled system may be monitored and/or controlled based on the output of the machine learnable function. Examples of computer-controlled systems includes robots, (semi- or fully) autonomous vehicles, domestic appliances, power tools, manufacturing machines, personal assistants, and access control systems. Systems that can be monitored include surveillances system and medical (imaging) systems, for example.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which:
Fig. 1 shows a system for training a machine learnable function;
Fig. 2 shows a system for applying a machine learnable function;
Fig. 3 shows the system for applying a machine learnable function as part of an (semi-)autonomous vehicle;
Fig. 4 shows a detailed example of a machine learnable convolutional network;
Fig. 5a shows a detailed example of training a machine learnable function using a regularization objective;
Fig. 5b shows a detailed example of generating a second input observation for use in training a machine learnable function;
Fig. 5c shows a detailed example of training a machine learnable function, being an image feature extractor for use in an overall image classifier;
Fig. 6 shows a computer-implemented method of training a machine learnable function;
Fig. 7 shows a computer-readable medium comprising data.

It should be noted that the figures are purely diagrammatic and not drawn to scale. In the figures, elements which correspond to elements already described may have the same reference numerals.

### DETAILED DESCRIPTION OF EMBODIMENTS

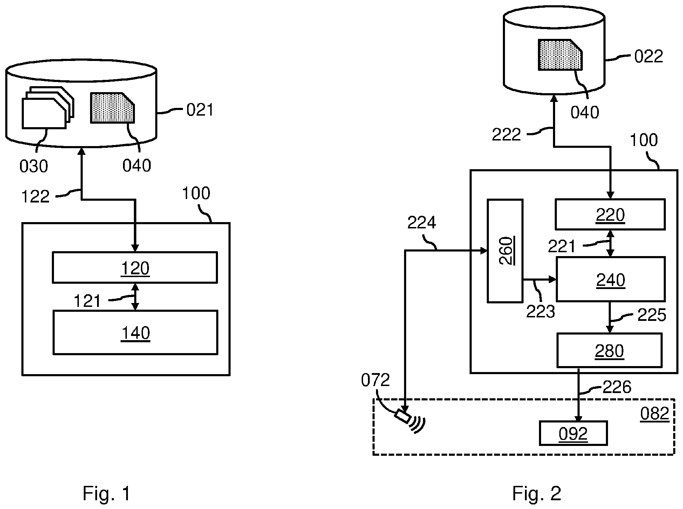

Fig. 1 shows a system 100 for training a machine learnable function. The machine learnable function may map an input observation to a function output. The machine learnable function may comprise one or more internal layers and/or an output layer. The function may be trained for use by a system for applying the machine learnable function, e.g., system 200 of Fig. 2, particularly to enable monitoring and/or controlling of a computer-controlled system based on the output of the machine learnable function.

The system 100 may comprise a data interface 120. The data interface 120 may be for accessing a training dataset 030 comprising multiple training input observations. The data interface 120 may also be for accessing a set of parameters 040 of the machine learnable function being trained. Once learned, the parameters 040 may be used for applying the machine learnable function to an observation, as also discussed with respect to Fig. 2. For example, as also illustrated in Fig. 1, the data interface may be constituted by a data storage interface 120 which may access the data 030, 040, via data communication 122, from a data storage 021. For example, the data storage interface 120 may be a memory interface or a persistent storage interface, e.g., a hard disk or an SSD interface, but also a personal, local or wide area network interface such as a Bluetooth, Zigbee or Wi-Fi interface or an ethernet or fibreoptic interface. The data storage 021 may be an internal data storage of the system 100, such as a hard drive or SSD, but also an external data storage, e.g., a network-accessible data storage. In some embodiments, the data 030, 040 may each be accessed from a different data storage, e.g., via a different subsystem of the data storage interface 120. Each subsystem may be of a type as is described above for the data storage interface 120.

The system 100 may further comprise a processor subsystem 140 which may be configured to, during operation of the system 100, learn the set of parameters of the machine learnable function by optimizing an objective function. The optimization may comprise rewarding the machine learnable function for responding predictably at a layer of the machine learnable function (e.g., an internal layer or the output layer) to a set of differences between input observations. The optimization may reward said predictability by means of a regularization objective included in the objective function.

To perform the optimization, processor subsystem 140 may obtain: a first input observation from the training dataset; a corresponding second input observation; and a difference label from the set of differences indicating a difference between the first and second input observations. Processor subsystem 140 may further apply the machine learnable function to determine first and second representations of the first and second input observations, respectively, at the layer of the machine learnable function. Processor subsystem 140 may further evaluate the regularization objective. The regularization objective may be configured to reward a mutual statistical dependence between the first and second representations given the difference label between the first and second input observations. System 100 may output the learned set of parameters via an output interface, e.g., by updating the set of parameters in storage 021 via data interface 120, by providing the set of parameters to a third party via a communication interface, etc.

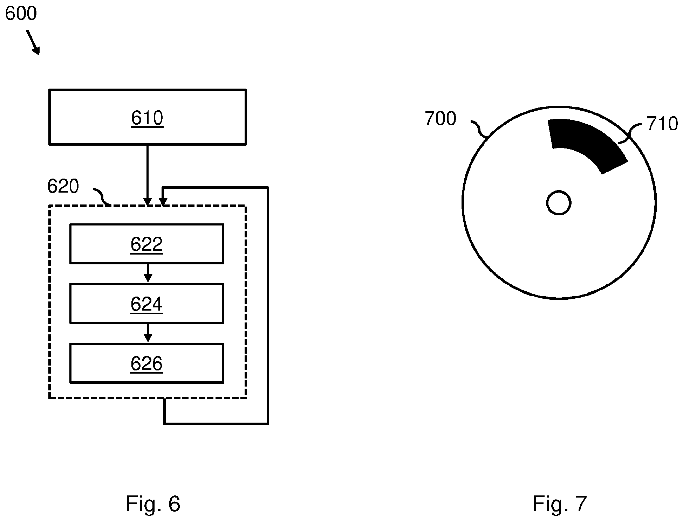

**Fig. 2** shows a system 200 for applying a machine learnable function as trained as described herein, e.g., by system 100 of Fig. 1 or according to computer-implemented method 600 of Fig. 6. For example, system 200 can be a vehicle control system, a robotics control system, a manufacturing control system, or a building control system. System 200 can also optionally perform the training, e.g., system 200 may combined with system 100.

The system 200 may comprise a data interface 220 for accessing the set of parameters 040 of the trained machine learnable function. The same considerations and implementation options apply as for data interface 120 of Fig. 1. Shown in the figure is a data interface 220 accessing parameters 040 from a storage 022 via data communication 222, similarly to storage 021 and data communication 122 of Fig. 1.

The system 200 may further comprise a processor subsystem 240 which may be configured to, during operation of the system 200, apply the machine learnable function parameterized by parameters 040 to an observation of a computer-controlled system and/or its environment. Based on the output of the machine learnable function, the computer-controlled system may be monitored and/or controlled in a conventional way. The same considerations and implementation options apply as for processor subsystem 140 of Fig. 1.

Fig. 2 further shows various optional components of the system 200. For example, in some embodiments, the system 200 may comprise a sensor interface 260 for directly accessing sensor data 224 providing an observation of the computer-controlled system and/or its environment. For example, the sensor data 224 may be acquired in the environment 082 by a sensor 072. The sensor may be arranged in environment 082 but may also be arranged remotely from the environment 082, for example if the quantity(s) can be measured remotely. The sensor 072 may but does not need to be part of the system 200. The sensor 072 may have any suitable form, such as an image sensor, a lidar sensor, a radar sensor, a pressure sensor, a contain temperature sensor, etc. The sensor interface 260 may have any suitable form corresponding in type to the type of sensor, including but not limited to a low-level communication interface, e.g., based on I2C or SPI data communication, or a data storage interface of a type as described for data interface 220.

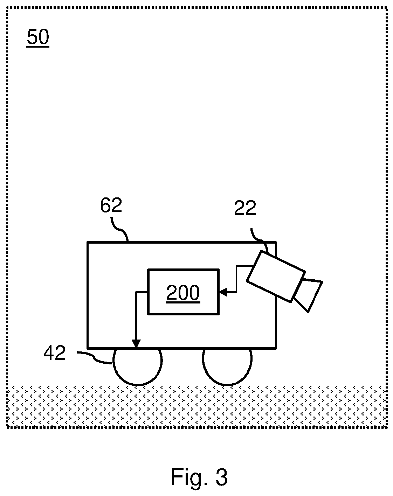

In some embodiments, the system 200 may comprise an actuator interface 280 for providing control data 226 to an actuator 092 in the environment 082. Such control data 226 may be generated by the processor subsystem 240 to control the actuator based on the output of the machine learnable function. The actuator can but does not have to be part of system 200. For example, the actuator may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Such type of control is described with reference to Fig. 3 for an (semi-)autonomous vehicle.

In other embodiments (not shown in Fig. 2), the system 200 may comprise an output interface to a rendering device, such as a display, a light source, a loudspeaker, a vibration motor, etc., which may be used to generate a sensory perceptible output signal which may be generated based on the function output. The sensory perceptible output signal may be directly indicative of the function output, but may also represent a derived sensory perceptible output signal, e.g., for use in guidance, navigation or other type of control of the computer-controlled system.

In general, each system described in this specification, including but not limited to the system 100 of Fig. 1 and the system 200 of Fig. 2, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 200 may be part of vehicle, robot or similar computer-controlled system, and/or may be represent a control system configured to control such a system.

**Fig. 3** shows an example of the above, in that the system 200 is shown to be a control system of an (semi-)autonomous vehicle 62 operating in an environment 50. The autonomous vehicle 62 may be autonomous in that it may comprise an autonomous driving system or a driving assistant system, with the latter also being referred to as a semi-autonomous system. In this example, the input observations used by system 200 may be images of the environment of the vehicle. The difference labels used in training may indicate, for example, a difference in weather conditions and/or a difference in occlusion level and/or position and/or orientation of an object in the environment.

The autonomous vehicle 62 may for example incorporate the system 200 to control the steering and the braking of the autonomous vehicle based on sensor data obtained from a video camera 22 integrated into the vehicle 62. For example, the system 200 may control an electric motor 42 to perform (regenerative) braking in case the autonomous vehicle 62 is expected to collide with a traffic participant. The system 200 may control the steering and/or braking to avoid collision with the traffic participant. For that purpose, the system 200 may obtain an image of the traffic situation around the vehicle 62 from camera 22 and classify it according to whether or not the traffic situation is safe. If the traffic situation is considered unsafe, the system 200 may take corresponding action. Since images of unsafe traffic situations are typically hard to obtain, generalizability is particularly important when learning to recognize them.

Various embodiments involve the use of a regularization objective to reward a machine learnable function for responding predictably, at a certain layer of the function, to a set of differences between input observations. In particular, this regularization objective may comprise the evaluation of a mutual information between representations of the input observations at that layer given a difference label between the input observations, and/or the evaluation of an interaction information between the representations and the difference label. These choices for the regularization objective are now justified from a mathematical point of view, in particular, with reference to the concept of equivariance as described in "Group Equivariant Convolutional Networks" by T. Cohen *et al.*

As described in the Cohen reference, for a mapping *Φ* which maps from one space to another, *Φ: X* → *Z* , a group element *g* in the group 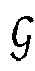 , and a group action ·, a mapping *Φ* may be referred to as being 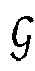 -equivariant, or equivariant with respect to the action of group G, if the mapping and the transformation commute, i.e.: *Φ*(*g · x*) *= g · Φ*(*x*)*.* In particular, the mapping Φ may be referred to as being 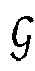 -invariant if the action of the transformation in 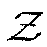 space is the identity transformation, i.e.: *Φ*(*g · x*) *= Φ*(*x*)*.* Accordingly, an equivariant map is an example of a map that responds predictably to known differences to its inputs, in particular, where the inputs relate to each other through the application of a known transformation of the input.

Interestingly**,** however, the inventors envisaged to define such predictability statistically, e.g., in terms of relations between random variables. This way, a more general definition is obtained, that is less rigid and that does not require transformation according to a group structure. This statistics-based definition of predictability may be referred to as "information-equivariance". This definition may be motivated as follows.

Using similar notation as for equivariance, denote an input observation to a machine learnable function by a random variable *x* in a space *X*. Let random variable *x̂* denote a second input observation, and let random variable *g* denote a difference between *x* and *x̂*. For example, in the setting of equivariance, *g* may be a group element sampled from 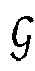 , and *x̂* may be *x̂* = *g · x,* i.e., a transformed input observation defined as deterministic combination of *g* and *x̂* through the group action in space 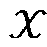 . Note that, if *g* is independent from *x*, then a sample from *x̂* may be regarded as another i.i.d. sample from *X*. Given a stochastic or deterministic map Φ: *X* → 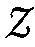 , the representations of the first and second input observations according to that map may be denoted as *z* = Φ(*x*) and *ẑ* = Φ(*x̂*), respectively. Here, *z* is a random variable; for example, if Φ is deterministic, its conditional distribution *P*(*z*|*x*) is a point mass at *Φ*(*x*)*.* Using this notation, predictability of how a mapping responds to differences between input observations may be defined in terms of the entropy *H*(*ẑ*|*z, g*) of *ẑ* conditioned on *z* and *g*: the smaller the entropy, the higher the predictability. In particular, it can be shown mathematically that 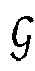 -equivariance for a group 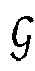 implies minimum conditional entropy.

Using known identities, the conditional mutual entropy may be decomposed as *H*(*ẑ*|*z,g*) *= H*(*ẑ*|*g*) *- I*(*ẑ*; *z*|*g*) *= H*(*ẑ*) *- I*(*ẑ*; *g*) *- I*(*ẑ*;*z*|*g*) *= H*(*ẑ*) *- I*(*ẑ*; *z*|*g*)*,* assuming that *g* is independent from *x* and *z* and thus shares no mutual information with them. Accordingly, instead of minimizing the conditional entropy, it is possible to instead maximize the conditional mutual information *I*(*ẑ*; *z*|*g*) between the first and second representations *z,ẑ* given the difference label *g*. This enables for example the use of mutual information estimation models, as described elsewhere. It is noted that, in the case of deterministic Φ, the entropy of *z* (and *ẑ*) may be upper bounded by the entropy of *x*, and thus, such a maximization may also explicitly maximize the entropies of both *z* and *ẑ* since their mutual information is only maximized when their individual entropies are maximized.

Further, it may be noted that a potential degenerate optimum is a map which is invariant to the differences indicated by *g,* e.g., Φ(*g* · *x*) = *Φ*(*x*)*.* Although the maximization of the entropy of *ẑ* may prevent this solution from becoming a global optimum, there is still a possibility of this solution being obtained as a local optimum, especially when estimating mutual information using a mutual information estimation model. Also because invariance is all that is required to solve various discriminative learning tasks, occurrence of this local optimum may be expected. This local optimum is however undesirable in terms of generalizability.

To discourage invariance in trained machine learnable functions, and thus to further improve generalizability, an additional term may be included in the regularization objective that discourages the mutual dependence between the first and second representations, unconditioned on the difference label. Specifically, the mutual information between *ẑ* and *z* (not conditioned on *g*) may be minimized. For example, the following regularization objective may be used: ${max}_{Φ} I \left(Φ\left(\hat{x}\right);\left.Φ\left(x\right)\right|g\right) - I \left(Φ\left(\hat{x}\right);Φ\left(x\right)\right) .$ Interestingly, this regularization objective corresponds to the known statistical measure of interaction information between the variables Φ(*x̂*), Φ(*x*), and *g*. This measure essentially represents an amount of information is that is contained jointly in the three which is not contained in a subset of the two. By using this interaction information, an information-equivariant mapping may be obtained without an invariant solution, and *z* and *ẑ* may be rewarded to be independent.

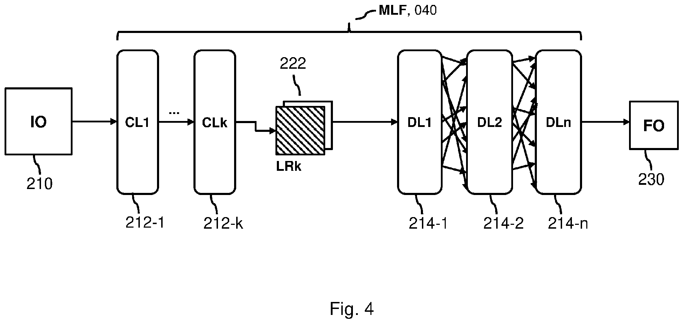

**Fig. 4** shows a detailed, yet non-limiting, example of a machine learnable function **MLF,** 040, in this case a convolutional network. Such a convolutional network is also referred to as a convolutional neural network (CNN). A convolutional network is a special type of neural network. Neural networks are also known as artificial neural networks. A neural network typically comprises multiple subsequent layers of nodes. The parameters of a neural network typically comprise weights of nodes of the neural network. For example, the number of layers of the network may be at least 5 or at least 10, and the number of nodes and/or weights may be at least 1000 or at least 10000.

Broadly speaking, a convolutional network is a neural network in which at least one layer is a convolutional layer, as discussed below. Various convolutional network architectures are known, including so-called fully convolutional networks, in which each layer of the network is a convolutional layer. This architecture is often used for semantic segmentation tasks in image classification, for example. Another known architecture is the one shown in the figure, in which the CNNs comprises two components: a convolutional part, comprising at least one convolutional layer, and a dense (e.g. fully-connected) part, comprising at least one dense layer. This architecture is often used for detection tasks in image classification, for example.

For the sake of illustration, it is now described how such a CNN may be used to obtain a function output **FO,** 230, for an input observation **IO**, 210. The input to a CNN is typically represented spatially, e.g., as a *M* × *N* × *d*-sized volume, where dimension *d* = 1 is for example used for greyscale images and dimension *d* = 3 is often used for color images. It is known to represent other types of data, e.g., audio data, as such a volume as well.

As shown in the figure, input observation **IO** may be input into the machine learnable function **MLF,** more specifically to a first layer **CL1,** 212-1 of filters (or in some cases, a single filter). Each of the filters may convolve over the input observation **IO**, together producing an activation volume, or "latent representation". Each "slice" of the activation volume may be the output of one of said filters. The latent representation may have a different size, e.g., spatial resolution, than the size *M* × *N* of the input observation **IO**. The latent representation may then be used as an input to subsequent layer, **CL2,** 212-2. The filter(s) of **CL2** may then convolve over the latent representation output by the first layer **CL1** to produce a second latent representation. This process may continue for further layers 212. Throughout this convolutional part of the CNN, the spatial relationship of latent representations to the input observation is typically preserved, although the spatial dimensions of latent representations may differ from one latent representation to another, and from the spatial dimensions of the input observation.

After the last layer **CLk,** 212-k of the convolutional part of the CNN (often referred to as the last convolutional layer, although in some embodiments the last layer **CLk** of the convolutional part may not necessarily be a convolutional layer, provided it preserves the spatial relationship as discussed above), the resulting latent representation **LRk,** 222, is in this example input into the first of the dense layers **DL1,** 214-1. The dense layers 214 may be fully-connected layers, in which the neurons of each fully-connected layer are connected to all of the neurons in another layer. After passing through the dense part of the CNN, a function output **FO,** e.g., a classification score or set of classification scores, may be output.

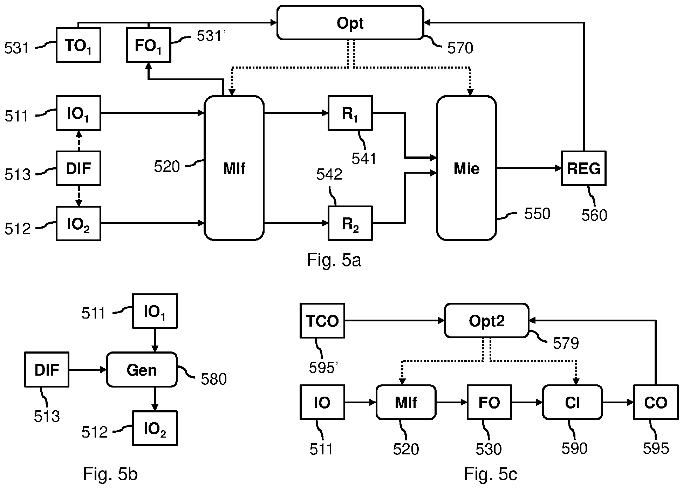

**Fig. 5a** shows a detailed, yet non-limiting, example of training a machine learnable function using a regularization objective.

Shown is a machine learnable function **Mlf**, 520. The machine learnable function **Mlf** may map input observations to function outputs. Generally, the machine learnable function **Mlf** can be a deterministic function (e.g., a conventional neural network), but the function can also be stochastic (e.g., a Bayesian neural network).

For example, the input observations can be images or other types of sensor data represented as images, or sensor data represented in a different way. For example, an input observation can comprise a time series of (direct or indirect) measurements of a certain physical quantity, or multiple such time series. Various features are explained below for images but are applicable to other types of sensor data as well.

The function outputs can be of various types. For example, the function output can comprise an image classification output indicating whether an image, or one or more segments of the image, belongs to one or more given classes. The machine learnable function **Mlf** can be an image classifier, e.g., a detection model or a semantic segmentation model. For a detection model, the output can comprise one or more classification scores. For a semantic segmentation model, the output can comprise a similarly dimensioned classification output as the input representing, presence information for respective segments of the input image. The machine learnable function **Mlf** can also e.g. be an image feature extractor, in which case the function output may be a vector of extracted features.

The function outputs of the machine learnable function **Mlf** are referred to herein as the "output layer" of the machine learnable function, and the function output as a representation of the input observation at the output layer. For example, the representation of an input observation at the output layer may comprise at least 10, at least 100, or at least 1000 features. The input observation can comprise at least 100, at least 1000, or at least 1000 features. In some embodiments, e.g., in an object detection model, the output representation has fewer features than the input observations; but the number of features and/or the spatial dimensions of the output representation can also be the same as that of the input observation, e.g., in case of a semantic segmentation model.

Apart from the output layer, the machine learnable function **Mlf** may have one or more internal layers. That is, evaluating the machine learnable function **Mlf** may comprise sequentially evaluating the one or more layers, the output of a previous layer being used as an input to the next layer. Machine learnable functions with layers include neural networks (in particular, deep neural networks), and deep Gaussian processes. For example, the machine learnable function **Mlf** may be a convolutional network, e.g., as described with respect to Fig. 4, in particular a fully convolutional network. It is not needed for machine learnable function **Mlf** to have a layered structure, however; for example, the machine learnable function can be a support vector machine or the like.

Machine learnable function **Mlf** may be parameterized by a set of parameters (not shown in the figure) that may be learned when training the machine learnable function. For example, the parameters can include neural network weights and the like. The number of parameters can be at least 1000 or at least 10000, for example.

The parameters may be learned, in an optimization operation Opt, 570, by optimizing an objective function. Various objective functions appropriate for respective learning tasks, e.g., classification, regression, feature extraction, auto-encoding, etc., are known, and can be used here. Conventional training techniques can be used, including iteratively optimizing the objective function. For example, stochastic optimization techniques such as stochastic gradient descent can be used, e.g., using the Adam optimizer as disclosed in Kingma and Ba, "Adam: A Method for Stochastic Optimization" (available at https://arxiv.org/abs/1412.6980 and incorporated herein by reference). As is known, such optimization methods may be heuristic and/or arrive at a local optimum. Training may be performed on an instance-by-instance basis or in batches, e.g., of at most or at least 64 or at most or at least 256 instances.

The figure illustrates supervised learning based on a training dataset of multiple input observations and corresponding training outputs. In this case, the objective function evaluated by optimization **Opt** typically includes a training loss to be minimized (sometimes referred to as the reconstruction loss), based on a difference between function outputs of the machine learnable function and the corresponding training outputs. Shown in the figure is an input observation **IO1**, 511, that is input to the machine learnable function to get a corresponding function output **FO1**, 531'. Optimization Opt may compare function output **FO1** to a training output **TO1,** 531, for the input observation, and adjust the parameters of the machine learnable function **Mlf** based on the comparison. Optimization **Opt** may also perform unsupervised learning, in which case the machine learnable function is typically still applied to training instances but the objective function is not based on training outputs. Regardless of whether the training is supervised or unsupervised, the number of training input observations can be, for example, at least 1000, at least 10000, or at least 10000.

Interestingly, in order to reward the machine learnable function **Mlf** for responding predictably at a layer of the machine learnable function to a set of differences between input observations, a regularization objective **Reg,** 560, may be included in the objective function being optimized. The layer at which the regularization objective is applied, can be the output layer, or an internal layer. It is also possible to include multiple respective regularization objectives for multiple respective layers (e.g., an internal layer or the output layer) of the machine learnable function. For ease of explanation, a single regularization objective is discussed here: multiple regularization objectives may be implemented by repeating the described operations for each regularization objective used.

The regularization objective **Reg** may be defined in terms of the result of applying the machine learnable function to a pair of input observations **IO1**, 511 and **IO2**, 512, that differ according to a given difference label **DIF,** 513. Options for obtaining the pair **IO1**, **IO2**, and the corresponding difference label **DIF** are discussed elsewhere. The set of difference labels is typically chosen to be discrete, e.g., comprising at most or at least 5, at most or at least 10, or a most or at least 25 possible differences. However, in principle the use of continuous difference labels is possible as well. Given the input observations **IO1** and **IO2**, the machine learnable function **Mlf** may be applied (at least in part) to get corresponding representations **R1,** 541, and **R2,** 542, of the input observations at the layer for which the regularization objective **Reg** is defined. Based on representations **R1** and **R2,** and difference label **DIF** (typically, based on multiple such triples **R1, R2, DIF),** the regularization objective **Reg** may be evaluated.

The regularization objective **REG** may be configured to reward a mutual statistical dependence between the first representation **R1** and second representation **R2** given the difference label **DIF.** As described elsewhere, there are various options for defining this regularization objective, including by minimizing the conditional entropy of **R2** given **R1** and **DIF,** and by maximizing the mutual information of **R1** and **R2** given **DIF,** e.g., *I*(Φ(*x̂*); Φ(*x*)|*g*)*.* The regularization objective **REG** may further discourage a mutual dependence between the first representation **R1** and the second representation **R2** unconditioned on the difference label **DIF,** for example, by minimizing a mutual information between **R1** and **R2** unconditioned on the difference label **DIF,** e.g., *I*(*Φ*(*x̂*); Φ(*x*)*.* For example, the regularization objective may comprise the interaction information between **R1, R2,** and **DIF,** e.g., *I*(Φ(*x̂*); Φ(*x*)|*g*) *- I*(Φ(*x̂*); Φ(*x*))*.* It is also possible to weigh terms *I*(Φ(*x̂*); Φ(*x*)|*g*) and *I*(*Φ*(*x̂*); Φ(*x*)) differently, e.g., according to a hyperparameter *λ*, e.g., *I*(*Φ*(*x̂*); Φ(*x*)|*g*) - *λ · I*(Φ(*x̂*); Φ(*x*))*.*

In order to evaluate the regularization objective **REG,** various conventional techniques for computing or estimating the respective statistical quantities can be used. This figure however illustrates a regularization objective based on (conditional) mutual information, where the (conditional) mutual information is estimated according to a trainable mutual information estimation model **Mie,** 550. An example of such a trainable mutual information estimation model is disclosed in M. Belghazi et al., "MINE: Mutual Information Neural Estimation" (available at https://arxiv.org/abs/1801.04062 ). Respective mutual information estimation models can be used to estimate the mutual information conditioned on the difference label **DIF,** e.g., *I*(*Φ*(*x̂*); Φ(*x*)|*g*); and unconditioned on the difference label, e.g., *I*(*Φ*(*x̂*); Φ(*x*)). For the former, the techniques of MINE can be adapted to estimate conditional mutual information in a straightforward way by sampling from distributions conditioned on the difference label. Interestingly, the mutual information estimation model(s) may be optimized in optimization **Opt** simultaneously with the training of the machine learnable function **Mlf**, for example, based on a single objective function. This allows the mutual information estimation to be progressively adapted as the machine learnable function is updated.

It is noted that, in view of the mutual information identities *I*(*X*; *Y*|*Z*) *- I*(*X; Y*) *= I*(*X*; *Z*|*Y*) *- I*(*X*; *Z*) *= I*(*Y; Z*|*X*) *- I*(*Y; Z*)*,* the interaction information may also be estimated as *I*(*Φ*(*x̂*); *g*|Φ(*x*)) *- I*(*Φ*(*x̂*); *g*) or as *I*(Φ(*x*); *g*|Φ(*x̂*)) *- I*(Φ(*x*); *g*)*,* for example, using mutual information estimation models as described above.

Proceeding now to how to obtain triples **IO1**, **IO2**, **DIF** of input observations and a corresponding difference label, several possibilities are envisaged. In some embodiments, such triples may be available as part of the training dataset. This may be referred to as the supervised setting. Another possibility, which is illustrated in **Fig. 5b****,** is that input observation **IO2** is generated from input observation **IO1** and difference type **DIF** in a generation operation **Gen,** 580. This may be referred to as the self-supervised setting. Any generation operation **Gen** suitable for the application at hand may be used. Difference type **DIF** may indicate a transformation to be applied to input observation **IO1**, e.g., which can be a geometric transformation such as rotation and/or translation, but also a synthetic modification to input observation **IO1** to modify properties of objects in a scene, or to modify observation conditions. For example, an image of an environment of a vehicle may be adapted to introduce snow or rain, to change a day scene to a night scene, etcetera.

A third option, not shown in the figures, is to determine the difference label **DIF** from the input observations **IO1** and **IO2** using a machine learnable labelling function. This function can be trained before performing optimization **Opt,** but learning this function simultaneously with the function **Mlf** (e.g., using multi-task learning) is generally preferred. The training of the labelling function can be supervised. E.g., in case difference labels are available for a subset of input observations, the labelling function can be learned on the subset and applied to pairs for which no label is available. Interestingly, the training can also be unsupervised, enabling to completely eliminate the labelling effort. For example, the labelling function may be trained as described in M. Caron et al., "Deep Clustering for Unsupervised Learning of Visual Features" (available at https://arxiv.org/abs/1807.05520 ).

**Fig. 5c** shows a detailed, yet non-limiting, example in which the machine learnable function being trained, is an image feature extractor for use in an overall image classifier **CI**, 590. That is, the overall image classifier **CI** may classify an input observation **IO**, e.g., an input image, by applying the machine learnable function **Mlf** to obtain a function output **FO** providing a vector of features extracted from the input observation **IO**; and by performing classification **CI** on the resulting extracted features **FO** using a further machine learnable function. In this case, to train the overall image classifier, the machine-learnable function can be first trained as described herein, without using classification labels. Thus, also input observations **IO** for which no classification label is available, can be used.

Afterwards, in an optimization operation **Opt2,** 579, the overall image classifier may be trained on training examples **IO** labelled with desired training classification outputs **TCO,** 595'. This optimization operation **Opt2** at least learns the parameters of the further machine learnable function **CI** outputting the classification; optionally, optimization **Opt2** may also fine-tune the machine-learnable function **Mlf**. To this end, optionally, the regularization objective **Reg** for the machine-learnable function **Mlf** may be included in the objective function for training the overall classifier.

**Fig. 6** shows a block-diagram of computer-implemented method 600 of training a machine learnable function. The machine learnable function may map an input observation to a function output. The machine learnable function may comprise one or more internal layers and/or an output layer. The method 600 may correspond to an operation of the system 100 of Fig. 1. However, this is not a limitation, in that the method 600 may also be performed using another system, apparatus or device.

The method 600 may comprise, in an operation titled "ACCESS TRAINING DATA, PARAMETERS", accessing 610: a training dataset comprising multiple training input observations; and a set of parameters of the machine learnable function.

The method 600 may comprise, in an operation titled "LEARN PARAMETERS", learning 620 the set of parameters of the machine learnable function by optimizing an objective function. The optimization may comprise rewarding the machine learnable function for responding predictably at a layer of the machine learnable function to a set of differences between input observations. The optimization may reward said predictability by means of a regularization objective included in the objective function.

The optimization performed in learning operation 620 may comprise, in an operation titled "OBTAIN OBSERVATIONS, DIFFERENCE LABEL", obtaining 622: a first input observation from the training dataset; a corresponding second input observation; and a difference label from the set of differences indicating a difference between the first and second input observations. The optimization may further comprise, in an operation titled "APPLY FUNCTION TO DETERMINE REPRESENTATIONS", applying 624 the machine learnable function to determine first and second representations of the first and second input observations, respectively, at the layer of the machine learnable function. The optimization may further comprise, in an operation titled "REWARD DEPENDENCE OF REPRESENTATIONS GIVEN DIFFERENCE LABEL", evaluating 626 the regularization objective, wherein the regularization objective may be configured to reward a mutual statistical dependence between the first and second representations given the difference label between the first and second input observations.

It will be appreciated that, in general, the operations of method 600 of Fig. 6 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 7****,** instructions for the computer, e.g., executable code, may be stored on a computer readable medium 700, e.g., in the form of a series 710 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 7 shows an optical disc 700. Alternatively, the computer readable medium 700 may comprise transitory or non-transitory data 710 representing a set of parameters of a machine learnable function trained by a computer-implemented method provided herein.

Examples, embodiments or optional features, whether indicated as non-limiting or not, are not to be understood as limiting the invention as claimed.

## Claims

1. A computer-implemented method (600) of training a machine learnable function, the machine learnable function mapping a sensor datum to a function output, the machine learnable function comprising one or more internal layers and/or an output layer, the method comprising:
- accessing (610): a training dataset comprising multiple training sensor data; and a set of parameters of the machine learnable function;
- learning (620) the set of parameters of the machine learnable function by optimizing an objective function, wherein theobjective function includes a regularization term, wherein evaluating the regularization term comprises the steps of:
- obtaining (622) a first sensor datum from the training dataset; a corresponding second sensor datum; and a difference label from a set of differences indicating a difference between the first sensor datum and the second sensor datum;
- applying (624) the machine learnable function to determine a first representation of the first sensor datum and a second representation of the second sensor datum, respectively, at a layer of the machine learnable function;
- Estimating (626) a conditional mutual information of the first representation and the second representation given the difference label.

2. The method (600) of claim 1, wherein the machine learnable function is an image classifier or an image feature extractor.

3. The method (600) of claim 2, wherein the machine learnable function is an image feature extractor for use in an overall image classifier, the image feature extractor being trained on an unlabelled training dataset; the method further comprising training the overall image classifier on a labelled training dataset.

4. The method (600) of claim 2 or 3, wherein the objective function comprises multiple respective regularization terms for multiple respective layers.

5. The method (600) of any one of claims 2-4, wherein the first sensor datum and the second sensor datum are images representing a same type of scene, the difference label indicating a difference of a property of an object in the scene and/or a difference in observation conditions of the scene.

6. The method (600) of claim 5, wherein the first and second images represent an environment around a vehicle; the difference label indicating at least one of a group of:
- a difference in weather conditions,
- a difference in occlusion level of an object in the environment,
- a difference in position of an object in the environment, and
- a difference in orientation of an object in the environment.

7. The method (600) of any preceding claim, wherein the machine learnable function is a convolutional network. *.*

8. The method (600) of any preceding claim, wherein the mutual information is estimated according to a trainable mutual information estimation model, the method further comprising training the mutual information estimation model simultaneously with the machine learnable function.

9. The method (600) of any preceding claim, comprising generating the second sensor datum from the first sensor datum and the difference label.

10. The method (600) of any preceding claim, comprising determining the difference label by applying a machine learnable labelling function to the first sensor datum and the second sensor datum.

11. The method (600) of any preceding claim, further comprising obtaining, via a sensor interface, sensor data providing an observation of a computer-controlled system and/or its environment; applying the machine learnable function to the observation; and monitoring and/or controlling the computer-controlled system based on the output of the machine learnable function.

12. A system (100) for training a machine learnable function, the machine learnable function mapping a sensor datum to a function output, the machine learnable function comprising one or more internal layers and/or an output layer, the system comprising:
- a data interface (120) for accessing: a training dataset (030) comprising multiple training sensor data; and a set of parameters (040) of the machine learnable function;
- a processor subsystem (140) configured to learn the set of parameters of the machine learnable function by optimizing an objective function, wherein the optimization function comprises a regularization term, wherein evaluating the regularization term comprises the steps of:
- obtaining: a first sensor datum from the training dataset; a corresponding second sensor datum; and a difference label from the set of differences indicating a difference between the first and second sensor datums;
- applying the machine learnable function to determine first representation of the first sensor datum and second representations of the second sensor datums, respectively, at a layer of the machine learnable function;
- estimating a conditional mutual information of the first representation and the second representation given the difference label.

13. A computer-readable medium (700) comprising transitory or non-transitory data (710) representing instructions which, when executed by a processor system, cause the processor system to perform the computer-implemented method according to claim 1; and/or a set of parameters of a machine learnable function trained by the computer-implemented method according to claim 1.

## Patentansprüche

1. Computerimplementiertes Verfahren (600) zum Trainieren einer maschinenlernbaren Funktion, wobei die maschinenlernbare Funktion ein Sensordatenelement auf eine Funktionsausgabe abbildet, wobei die maschinenlernbare Funktion eine oder mehrere interne Schichten und/oder eine Ausgabeschicht umfasst, wobei das Verfahren Folgendes umfasst:
- Zugreifen (610) auf: einen Trainingsdatensatz, der mehrere Trainingssensordaten umfasst; und einen Satz von Parametern der maschinenlernbaren Funktion;
- Lernen (620) des Satzes von Parametern der maschinenlernbaren Funktion durch Optimieren einer Zielfunktion, wobei die Zielfunktion einen Regularisierungsterm beinhaltet, wobei das Evaluieren des Regularisierungsterms die folgenden Schritte umfasst:
- Erhalten (622) eines ersten Sensordatenelements aus dem Trainingsdatensatz; eines entsprechenden zweiten Sensordatenelements; und eines Unterschiedslabels von einem Satz von Unterschieden, die einen Unterschied zwischen dem ersten Sensordatenelement und dem zweiten Sensordatenelement angeben;
- Anwenden (624) der maschinenlernbaren Funktion, um eine erste Repräsentation des ersten Sensordatenelements bzw. eine zweite Repräsentation des zweiten Sensordatenelements an einer Schicht der maschinenlernbaren Funktion zu bestimmen;
- Schätzen (626) einer bedingten gegenseitigen Information der ersten Repräsentation und der zweiten Repräsentation unter Berücksichtigung des Unterschiedslabels.

2. Verfahren (600) nach Anspruch 1, wobei die maschinenlernbare Funktion ein Bildklassifizierer oder ein Bildmerkmalsextraktor ist.

3. Verfahren (600) nach Anspruch 2, wobei die maschinenlernbare Funktion ein Bildmerkmalsextraktor zur Verwendung in einem Gesamtbildklassifizierer ist, wobei der Bildmerkmalsextraktor an einem ungelabelten Trainingsdatensatz trainiert wird; wobei das Verfahren ferner Trainieren des Gesamtbildklassifizierers an einem gelabelten Trainingsdatensatz umfasst.

4. Verfahren (600) nach Anspruch 2 oder 3, wobei die Zielfunktion mehrere jeweilige Regularisierungsterme für mehrere jeweilige Schichten umfasst.

5. Verfahren (600) nach einem der Ansprüche 2-4, wobei das erste Sensordatenelement und das zweite Sensordatenelement Bilder sind, die einen gleichen Szenentyp repräsentieren, wobei das Unterschiedslabel einen Unterschied einer Eigenschaft eines Objekts in der Szene und/oder einen Unterschied der Beobachtungsbedingungen der Szene angibt.

6. Verfahren (600) nach Anspruch 5, wobei das erste und das zweite Bild eine Umgebung um ein Fahrzeug repräsentieren; wobei das Unterschiedslabel mindestens eines aus einer Gruppe von Folgendem angibt:
- einen Unterschied bei den Witterungsbedingungen,
- einen Unterschied des Verdeckungsniveaus eines Objekts in der Umgebung,
- einen Unterschied der Position eines Objekts in der Umgebung, und
- einen Unterschied der Orientierung eines Objekts in der Umgebung.

7. Verfahren (600) nach einem der vorhergehenden Ansprüche, wobei die maschinenlernbare Funktion ein Faltungsnetzwerk ist.

8. Verfahren (600) nach einem der vorhergehenden Ansprüche, wobei die gegenseitige Information gemäß einem trainierbaren Modell zur Schätzung gegenseitiger Informationen geschätzt wird, wobei das Verfahren ferner Trainieren des Modells zur Schätzung gegenseitiger Informationen gleichzeitig mit der maschinenlernbaren Funktion umfasst.

9. Verfahren (600) nach einem der vorhergehenden Ansprüche, umfassend Erzeugen des zweiten Sensordatenelements aus dem ersten Sensordatenelement und dem Unterschiedslabel.

10. Verfahren (600) nach einem der vorhergehenden Ansprüche, umfassend Bestimmen des Unterschiedslabels durch Anwenden einer maschinenlernbaren Labeling-Funktion auf das erste Sensordatenelement und das zweite Sensordatenelement.

11. Verfahren (600) nach einem der vorhergehenden Ansprüche, ferner umfassend Erhalten, über eine Sensorschnittstelle, von Sensordaten, die eine Beobachtung eines computergesteuerten Systems und/oder seiner Umgebung bereitstellen; Anwenden der maschinenlernbaren Funktion auf die Beobachtung; und Überwachen und/oder Steuern des computergesteuerten Systems basierend auf der Ausgabe der maschinenlernbaren Funktion.

12. System (100) zum Trainieren einer maschinenlernbaren Funktion, wobei die maschinenlernbare Funktion ein Sensordatenelement auf eine Funktionsausgabe abbildet, wobei die maschinenlernbare Funktion eine oder mehrere interne Schichten und/oder eine Ausgabeschicht umfasst, wobei das System Folgendes umfasst:
- eine Datenschnittstelle (120) zum Zugreifen auf: einen Trainingsdatensatz (030), der mehrere Trainingssensordaten umfasst; und einen Satz von Parametern (040) der maschinenlernbaren Funktion;
- ein Prozessorsubsystem (140), das ausgelegt ist zum Lernen des Satzes von Parametern der maschinenlernbaren Funktion durch Optimieren einer Zielfunktion, wobei die Optimierungsfunktion einen Regularisierungsterm umfasst, wobei das Evaluieren des Regularisierungsterms die folgenden Schritte umfasst:
- Erhalten eines ersten Sensordatenelements aus dem Trainingsdatensatz; eines entsprechenden zweiten Sensordatenelements; und eines Unterschiedslabels von dem Satz von Unterschieden, die einen Unterschied zwischen dem ersten und dem zweiten Sensordatenelement angeben;
- Anwenden der maschinenlernbaren Funktion, um eine erste Repräsentation des ersten Sensordatenelements bzw. zweite Repräsentationen der zweiten Sensordatenelemente an einer Schicht der maschinenlernbaren Funktion zu bestimmen;
- Schätzen einer bedingten gegenseitigen Information der ersten Repräsentation und der zweiten Repräsentation unter Berücksichtigung des Unterschiedslabels.

13. Computerlesbares Medium (700), das flüchtige oder nichtflüchtige Daten (710) umfasst, die Anweisungen darstellen, die bei Ausführung durch ein Prozessorsystem das Prozessorsystem veranlassen, das computerimplementierte Verfahren nach Anspruch 1 durchzuführen; und/oder einen Satz von Parametern einer maschinenlernbaren Funktion, die durch das computerimplementierte Verfahren nach Anspruch 1 trainiert wird.

## Revendications

1. Procédé (600), mis en œuvre par ordinateur, d'apprentissage d'une fonction apte à l'apprentissage automatique, la fonction apte à l'apprentissage automatique mettant en correspondance une donnée de capteur avec une sortie de fonction, la fonction apte à l'apprentissage automatique comprenant une ou plusieurs couches internes et/ou une couche de sortie, le procédé comprenant :
- l'accès (610) à : un ensemble de données d'apprentissage comprenant de multiples données de capteurs d'apprentissage ; et un ensemble de paramètres de la fonction apte à l'apprentissage automatique ;
- l'apprentissage (620) de l'ensemble de paramètres de la fonction apte à l'apprentissage automatique, par optimisation d'une fonction objectif, la fonction objectif incluant un terme de régularisation, l'évaluation du terme de régularisation comprenant les étapes de :
- l'obtention (622) d'une première donnée de capteur à partir de l'ensemble de données d'apprentissage ; d'une deuxième donnée de capteur correspondante ; et d'une étiquette de différence à partir d'un ensemble de différences indiquant une différence entre la première donnée de capteur et la deuxième donnée de capteur ;
- l'application (624) de la fonction apte à l'apprentissage automatique pour déterminer respectivement une première représentation de la première donnée de capteur et une deuxième représentation de la deuxième donnée de capteur au niveau d'une couche de la fonction apte à l'apprentissage automatique ;
- l'estimation (626) d'une information mutuelle conditionnelle de la première représentation et de la deuxième représentation étant donné l'étiquette de différence.

2. Procédé (600) selon la revendication 1, la fonction apte à l'apprentissage automatique étant un classificateur d'image ou un extracteur de caractéristiques d'image.

3. Procédé (600) selon la revendication 2, la fonction apte à l'apprentissage automatique étant un extracteur de caractéristiques d'image destiné à être utilisé dans un classificateur d'image global, l'extracteur de caractéristiques d'image étant entraîné sur un ensemble de données d'apprentissage non étiqueté ; le procédé comprenant en outre l'entraînement du classificateur d'image global sur un ensemble de données d'apprentissage étiqueté.

4. Procédé (600) selon la revendication 2 ou 3, la fonction objectif comprenant de multiples termes de régularisation respectifs pour de multiples couches respectives.

5. Procédé (600) selon l'une quelconque des revendications 2 à 4, la première donnée de capteur et la deuxième donnée de capteur étant des images représentant un même type de scène, l'étiquette de différence indiquant une différence d'une propriété d'un objet dans la scène et/ou une différence dans les conditions d'observation de la scène.

6. Procédé (600) selon la revendication 5, les première et deuxième images représentant un environnement autour d'un véhicule ; l'étiquette de différence indiquant au moins un élément d'un groupe constitué de :
- une différence de conditions météorologiques,
- une différence de niveau d'occultation d'un objet dans l'environnement,
- une différence de position d'un objet dans l'environnement et
- une différence d'orientation d'un objet dans l'environnement.

7. Procédé (600) selon l'une quelconque des revendications précédentes, la fonction apte à l'apprentissage automatique étant un réseau convolutif.

8. Procédé (600) selon l'une quelconque des revendications précédentes, l'information mutuelle étant estimée selon un modèle d'estimation d'informations mutuelles susceptible d'être entraîné, le procédé comprenant en outre l'entraînement du modèle d'estimation d'informations mutuelles simultanément avec la fonction apte à l'apprentissage automatique.

9. Procédé (600) selon l'une quelconque des revendications précédentes, comprenant la génération de la deuxième donnée de capteur à partir de la première donnée de capteur et de l'étiquette de différence.

10. Procédé (600) selon l'une quelconque des revendications précédentes, comprenant la détermination de l'étiquette de différence en appliquant une fonction d'étiquetage apte à l'apprentissage automatique à la première donnée de capteur et à la deuxième donnée de capteur.

11. Procédé (600) selon l'une quelconque des revendications précédentes, comprenant en outre l'obtention, via une interface de capteur, de données de capteur fournissant une observation d'un système commandé par ordinateur et/ou de son environnement ; l'application de la fonction apte à l'apprentissage automatique à l'observation ; et la surveillance et/ou la commande du système commandé par ordinateur sur la base de la sortie de la fonction apte à l'apprentissage automatique.

12. Système (100) d'apprentissage d'une fonction apte à l'apprentissage automatique, la fonction apte à l'apprentissage automatique mettant en correspondance une donnée de capteur avec une sortie de fonction, la fonction apte à l'apprentissage automatique comprenant une ou plusieurs couches internes et/ou une couche de sortie, le système comprenant :
- une interface (120) de données pour accéder à : un ensemble (030) de données d'apprentissage comprenant de multiples données de capteurs d'apprentissage ; et un ensemble (040) de paramètres de la fonction apte à l'apprentissage automatique ;
- un sous-système processeur (140) configuré pour apprendre l'ensemble des paramètres de la fonction apte à l'apprentissage automatique en optimisant une fonction objectif, la fonction d'optimisation comprenant un terme de régularisation, l'évaluation du terme de régularisation comprenant les étapes de :
- l'obtention : d'une première donnée de capteur à partir de l'ensemble de données d'apprentissage ; d'une deuxième donnée de capteur correspondante ; et d'une étiquette de différence à partir de l'ensemble de différences indiquant une différence entre les première et deuxième données de capteur ;
- l'application de la fonction apte à l'apprentissage automatique pour déterminer respectivement une première représentation de la première donnée de capteur et des deuxièmes représentations des deuxièmes données de capteur au niveau d'une couche de la fonction apte à l'apprentissage automatique ;
- l'estimation d'une information mutuelle conditionnelle de la première représentation et de la deuxième représentation étant donné l'étiquette de différence.

13. Support (700) lisible par ordinateur comprenant des données transitoires ou non transitoires (710) représentant des instructions qui, lorsqu'elles sont exécutées par un système de processeur, amènent le système de processeur à réaliser le procédé mis en œuvre par ordinateur selon la revendication 1 ; et/ou un ensemble de paramètres d'une fonction apte à l'apprentissage automatique apprise par le procédé mis en œuvre par ordinateur selon la revendication 1.
